# EUROPÄISCHE PATENTSCHRIFT

(11) **EP 2 992 794 B1**
(45) Veröffentlichungstag und Bekanntmachung des Hinweises auf die Patenterteilung: **04.01.2017**
(21) Anmeldenummer: 15183830.7
(22) Anmeldetag: 04.09.2015
(51) Int. Cl.: A47J 36/10, A47J 43/046, A47J 43/07

(54) **ELEKTRISCHES KÜCHENGERÄT**
ELECTRICAL KITCHEN APPLIANCE
APPAREIL DE CUISINE ELECTRIQUE

(30) Priorität: 04.09.2014 DE 102014112775
(43) Veröffentlichungstag der Anmeldung: 09.03.2016
(73) Patentinhaber: Vorwerk & Co. Interholding GmbH, 42275 Wuppertal (DE)
(72) Erfinder: Weber, Klaus-Martin, 42109 Wuppertal (DE); Lang, Torsten, 42657 Solingen (DE)
(74) Vertreter: Müller, Enno

(56) Entgegenhaltungen:
- WO-A1-2014/026866

## Beschreibung

Die Erfindung betrifft ein elektrisches Küchengerät, mit einem Gefäß, einem Deckel zum Verschließen des Gefäßes, einer Verarbeitungseinrichtung zum Verarbeiten eines Nahrungsmittels in dem Gefäß und einem Verriegelungsteil zum Verriegeln des Deckels auf dem Gefäß, wobei das Verriegelungsteil zum Verriegeln des Deckels auf dem Gefäß mittels eines Verriegelungsantriebs um eine Verriegelungsachse drehbar ist.

Derartige Küchengeräte mit einer Verarbeitungseinrichtung zum Verarbeiten eines Nahrungsmittels, die ein Gefäß und einen Deckel zum Verschließen des Gefäßes aufweisen, sind aus der Praxis gut bekannt. Exemplarisch sei auf Standmixer und auf multifunktionale Küchenmaschinen verwiesen, die typischerweise am Boden des Gefäßes als Verarbeitungseinrichtung mit einer Rühreinrichtung bzw. einem rotierenden Messer versehen sind. Im Betrieb eines derartigen Küchengeräts, der im Allgemeinen nur bei aufgesetztem Deckel möglich ist, muss sichergestellt sein, dass eine vorschriftsmäßige Befestigung des Deckels auf dem Gefäß gewährleistet ist.

Dazu ist z.B. Der DE 10 2013 012 192 A1 oder der DE 10 2010 017 719 A1 entnehmbar, dass Sensoren vorgesehen sind, die die erfolgte Verriegelung des Deckels auf dem Gefäß erfassen. Diese Sensoren sind so ausgestaltet, dass sie einen Abschnitt eines mit dem Deckel zusammenwirkenden Verriegelungsteils überwachen, das in der ordnungsgemäßen Verriegelungsstellung eine vorbestimmte Position eingenommen haben muss.

Ausgehend davon ist es die Aufgabe der Erfindung, eine alternative Möglichkeit zur sicheren Erfassung eines Verriegelungszustandes eines Deckels auf einem Gefäß eines elektrischen Küchengeräts anzugeben.

Diese Aufgabe wird durch den Gegenstand des Patentanspruchs 1 gelöst. Bevorzugte Ausführungsformen sind in den Unteransprüchen angegeben.

Die Erfindung liegt insofern in einem elektrischen Küchengerät, mit einem Gefäß, einem Deckel zu Verschließen des Gefäßes, einer Verarbeitungseinrichtung zum Verarbeiten eines Nahrungsmittels in dem Gefäß und einem Verriegelungsteil zum Verriegeln des Deckels auf dem Gefäß, wobei das Verriegelungsteil zum Verriegeln des Deckels auf dem Gefäß mittels eines Verriegelungsantriebs um eine Verriegelungsachse drehbar ist, dadurch gekennzeichnet, dass eine Erfassungseinrichtung vorgesehen ist, mit der der Weg erfassbar ist, den beim Drehen des Verriegelungsteils der Verriegelungsantrieb, das Verriegelungsteil selbst oder/und ein den Verriegelungsantrieb mit dem Verriegelungsteil verbindendes Verbindungsteil zurücklegt.

Erfindungsgemäß maßgeblich ist also, dass mittels der Erfassungseinrichtung nicht nur erfasst wird, ob das Verriegelungsteil beim Verriegeln des Deckels auf dem Gefäß eine vorbestimmte Endstellung, nämlich die vorschriftsmäßige Verriegelungsstellung, erreicht hat. Vielmehr zielt die Erfindung darauf ab, mit der Erfassungseinrichtung den Weg zu erfassen, der beim Drehen des Verriegelungsteils z.B. durch den Verriegelungsantrieb zurückgelegt wird. Zusätzlich oder alternativ dazu ist erfindungsgemäß eine Erfassung des vom Verriegelungsteil selbst zurückgelegten Weges vorgesehen, wobei es sich bei diesem erfassten Weg dann um einen Drehweg handelt, der in Form einer Winkelangabe angegeben werden kann. Schließlich ist im Rahmen der Erfindung auch vorgesehen, dass ein Verbindungsteil zwischen dem Verriegelungsteil und dem Verriegelungsantrieb hinsichtlich des von ihm zurückgelegten Weges von der Erfassungseinrichtung überwacht wird.

Ein wesentlicher Vorteil, der mit der Erfindung erzielt wird, liegt darin, dass nicht nur das Erreichen einer vorschriftsmäßigen Verriegelungsstellung erfasst sondern auch ansonsten eine Aussage über die Drehstellung des Verriegelungsteils getroffen werden kann. So kann z.B. festgestellt werden, dass das Verriegelungsteil nahe an seiner vorschriftsmäßigen Verriegelungsstellung steht oder aber in einer Stellung, die dem vollkommen geöffneten Zustand entspricht.

Zur Erfassung des Weges, der beim Drehen des Verriegelungsteils der Verriegelungsantrieb, das Verriegelungsteil selbst oder/und ein den Verriegelungsantrieb mit dem Verriegelungsteil verbindendes Verbindungsteil zurücklegt, kann die Erfassungseinrichtung nach unterschiedlichen Prinzipien arbeiten. Gemäß einer bevorzugten Weiterbildung der Erfindung ist jedoch vorgesehen, dass die Erfassungseinrichtung zur Drehwinkelerfassung des Verriegelungsteils ausgebildet und eingerichtet ist. Auf diese Weise kann der Drehwinkel erfasst werden, in dem das Verriegelungsteil jeweils steht. In diesem Zusammenhang ist gemäß einer bevorzugten Weiterbildung der Erfindung zur Drehwinkelerfassung ein Potentiometer, vorzugsweise ein kontaktlos arbeitendes Potentiometer, oder/und eine Hall-Sensor-Anordnung vorgesehen.

Als Verriegelungsantrieb kommen unterschiedliche Antriebe in Betracht, insbesondere automatische Antriebe, die auf Tastendruck eines Benutzers gestartet werden können und keine zusätzlichen manuellen Eingriffe erfordern. Gemäß einer bevorzugten Weiterbildung der Erfindung weist der Verriegelungsantrieb einen Elektromotor, einen Elektromagneten, einen Piezoantrieb oder/und einen Hydraulikantrieb auf. In diesem Zusammenhang ist ganz besonders bevorzugt vorgesehen, dass der Verriegelungsantrieb ein Schrittantrieb, wie ein Schrittmotor, ist und die Erfassungseinrichtung zur Erfassung der Arbeitsschritte des Schrittantriebs ausgebildet und eingerichtet ist. Dies ist insofern vorteilhaft, als dass der vom Verriegelungsantrieb zurückgelegte Weg ohne eigene Drehwinkelerfassung oder einer sonstigen Wegerfassung möglich ist, nämlich rein durch Abzählen der Arbeitsschritte des Schrittantriebs.

Gemäß einer bevorzugten Weiterbildung der Erfindung ist ferner eine mit der Erfassungseinrichtung verbundene Ermittlungseinrichtung vorgesehen, die zur Ermittlung der Drehstellung des Verriegelungsteils auf der Grundlage des von der Erfassungseinrichtung erfassten Weges ausgebildet und eingerichtet ist. Eine derartige Ermittlungseinrichtung ist insbesondere dann von Vorteil, wenn die Drehstellung des Verriegelungsteils nicht durch Ermittlung des vom Verriegelungsteil beim Drehen zurückgelegten Weges erfasst wird, sondern nur mittelbar durch die Erfassung des von dem Verriegelungsantrieb bzw. eines Verbindungsteils zwischen dem Verriegelungsantrieb und der Verriegelungseinrichtung zurückgelegten Weges.

Weiterhin ist gemäß einer bevorzugten Weiterbildung der Erfindung zusätzlich eine mit der Ermittlungseinrichtung verbundene Freischalteinrichtung vorgesehen, die dazu ausgebildet und eingerichtet ist, den Betrieb der Verarbeitungseinrichtung nur dann freizuschalten, wenn von der Ermittlungseinrichtung eine Drehstellung des Verriegelungsteils in einem vorbestimmten Bereich ermittelt worden ist. Konkret kann also vorgesehen sein, dass gemäß dieser bevorzugten Weiterbildung der Erfindung eine Verarbeitung eines in das Gefäß eingebrachten Nahrungsmittels mit der Verarbeitungseinrichtung nur dann ermöglicht, nämlich freigeschaltet wird, wenn von der Ermittlungseinrichtung eine Drehstellung des Verriegelungsteils ermittelt worden ist, die der vorschriftsmäßigen Verriegelungsstellung entspricht. Auf diese Weise können Gefahren vermieden werden, die sich durch das Berühren der Verarbeitungseinrichtung z.B. mit der Hand eines Benutzers des elektrischen Küchengeräts bei abgenommenem Deckel ergeben würden.

Nachfolgend wird die Erfindung anhand eines bevorzugten Ausführungsbeispiels unter Bezugnahme auf die Zeichnung weiter im Detail erläutert.

### In der Zeichnung zeigt

- Fig. 1: schematisch ein elektrisches Küchengerät gemäß einem bevorzugten Ausführungsbeispiel der Erfindung in einer Seitenansicht, teilweise im Schnitt,
- Fig. 2: das elektrische Küchengerät gemäß dem bevorzugten Ausführungsbeispiel der Erfindung in einer Draufsicht, teilweise im Schnitt,
- Fig. 3: eine Schnittansicht entlang der Linie III-III aus Fig. 2 in einer offenen Stellung des Verriegelungsteils bei abgenommenem Deckel,
- Fig. 4: eine Schnittansicht entlang der Linie III-III aus Fig. 2 bei auf das Gefäß aufgesetztem Deckel und offenem Verriegelungsteil,
- Fig. 5: eine Schnittansicht entlang der Linie III-III aus Fig. 2 bei auf das Gefäß aufgesetztem Deckel und verriegeltem Verriegelungsteil und
- Fig. 6: schematisch das Verfahren zum Freischalten der Verarbeitungseinrichtung auf der Grundlage der erfassten Drehwinkelstellung der Verriegelungsteile gemäß dem bevorzugten Ausführungsbeispiel der Erfindung.

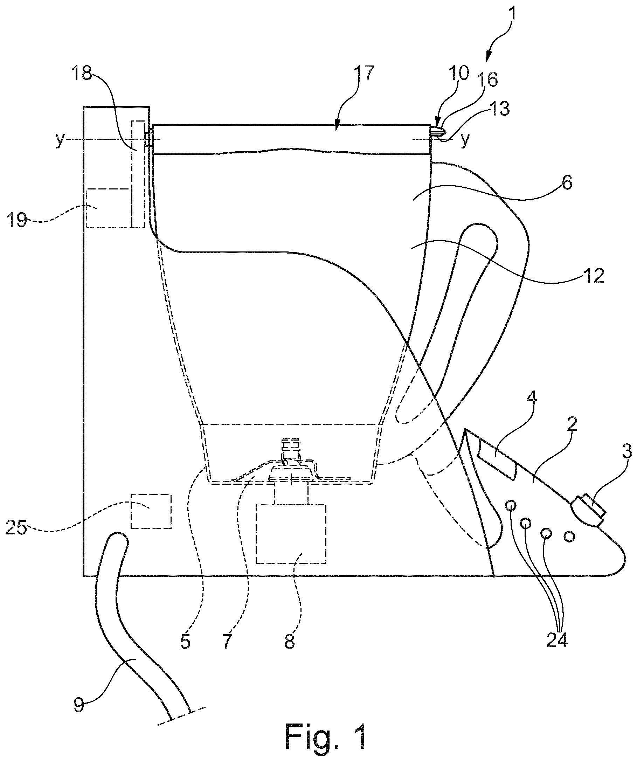

Aus Fig. 1 ist ein elektrisches Küchengerät 1 gemäß einem bevorzugten Ausführungsbeispiel der Erfindung in einer Seitenansicht, teilweise im Schnitt, ersichtlich. Das elektrische Küchengerät 1 weist ein Bedienfeld 2 mit einem Einstellknopf 3 und Tasten 24 sowie mit einem Display 4 zum Anzeigen der über den Einstellknopf 3 und die Tasten 24 einzustellenden Parameter auf.

Das elektrische Küchengerät 1 gemäß dem vorliegend beschriebenen bevorzugten Ausführungsbeispiel der Erfindung ist ferner mit einer Gefäßaufnahme 5 versehen, in die ein Gefäß 6 eingesetzt ist, in das darin zu verarbeitende Nahrungsmittel eingefüllt werden können. Innerhalb des Gefäßes 6 ist eine Verarbeitungseinrichtung 7 in Form eines Rühr- und Schneidwerks zur Verarbeitung von in das Gefäß 6 eingebrachten Nahrungsmitteln vorgesehen. Angetrieben wird die Verarbeitungseinrichtung 7 durch einen darunter angeordneten Elektromotor 8. Die Elektroversorgung des elektrischen Küchengeräts 1 erfolgt über ein Netzanschlusskabel 9.

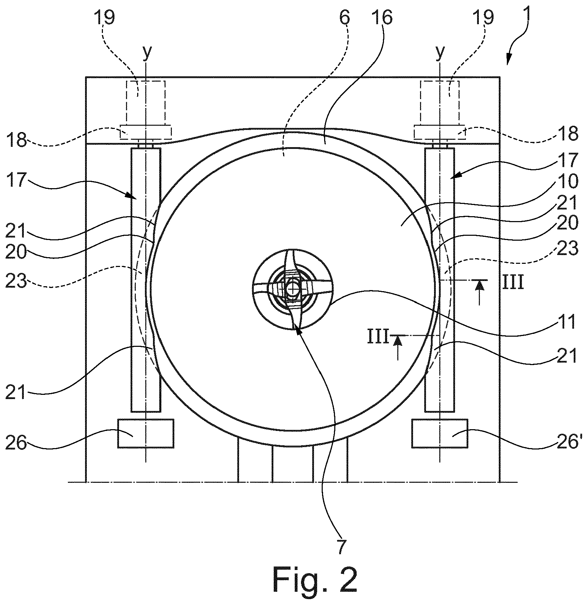

Das Gefäß 6 ist mittels eines Deckels 10 verschließbar, wobei Fig. 1 ein Zustand des elektrischen Küchengeräts 1 entnehmbar ist, in dem das Gefäß 6 mit dem Deckel 10 verschlossen ist. Wie weiter aus Fig. 2 ersichtlich, die eine Draufsicht auf das elektrische Küchengerät 1 gemäß dem bevorzugten Ausführungsbeispiel der Erfindung, teilweise im Schnitt, zeigt, ist im Deckel 10 eine Einfüllöffnung 11 vorgesehen, so dass auch im auf das Gefäß 6 aufgesetzten Zustand des Deckels 10 Nahrungsmittel in das Gefäß 6 eingefüllt werden können.

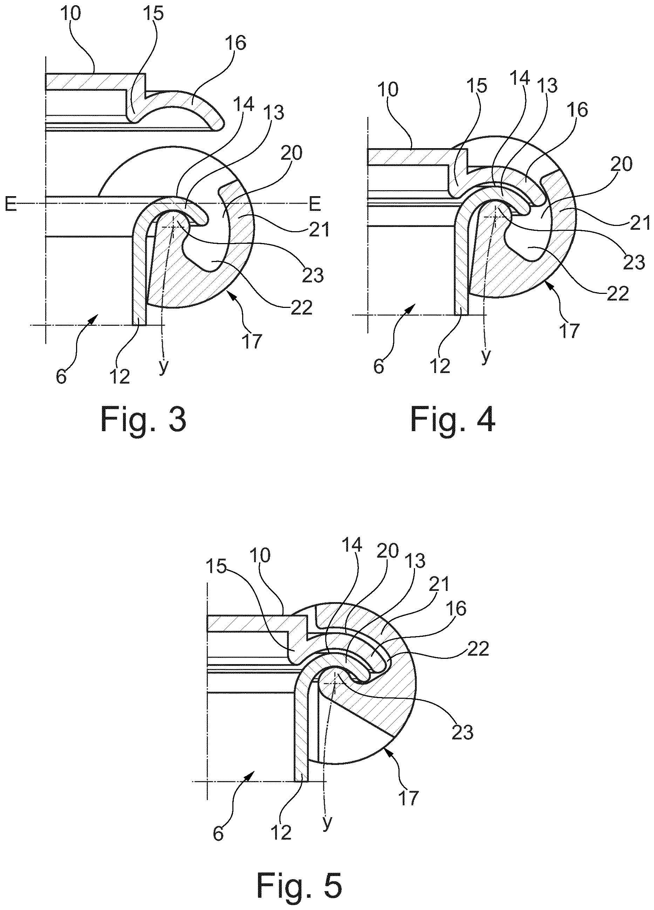

Wie wiederum aus Fig. 1 ersichtlich, weist das Gefäß 6 eine Gefäßwandung 12 auf mit einem Gefäßrand 13, der eine obere Öffnung des Gefäßes 6 definiert. Insbesondere den Schnittansichten aus den Fig. 3, 4 und 5 ist entnehmbar, dass die Gefäßwandung 12 an ihrem oberen Ende einen derartigen Gefäßrand 13 aufweist, der mit einer Wölbungsfläche 14 versehen ist.

Diesen Schnittansichten aus den Fig. 3, 4 und 5 ist ferner entnehmbar, dass der Deckel 10 an seiner Unterseite mit einem an seinem äußeren Rand umlaufenden Kragen 15 versehen ist. An diesen Kragen schließt sich ein Deckelrand 16 an, der von seiner Krümmung her der Wölbungsfläche 14 am Gefäßrand 13 entspricht.

Um nun den Deckel 10 auf dem Gefäß 6 verriegeln zu können, sind zwei Verriegelungsteile 17 vorgesehen, die den Deckel 10 gegen das Gefäß 6 verriegeln können. Diese Verriegelungsteile 17 weisen, wie insbesondere den Fig. 1 und 2 entnehmbar, eine langgestreckte Form auf mit einem Querschnitt in ihrem mittleren Bereich, wie den Fig. 3, 4 und 5 entnehmbar. Den Fig. 3, 4 und 5 ist auch entnehmbar, dass die Verriegelungsteile 17 um eine Drehachse y drehbar sind. Auf diese Weise sind die Verriegelungsteile 17, durch eine entsprechende Drehung zwischen einem offenen Zustand, der in den Fig. 3 und 4 gezeigt ist, und einem Verriegelungszustand, der in Fig. 5 gezeigt ist, bewegbar.

Insbesondere können auf diese Weise, nachdem der Deckel 10 auf das Gefäß 6, wie in den Fig. 3 und 4 gezeigt, aufgesetzt worden ist, die Verriegelungsteile 17 von ihrer offenen Stellung in die Verriegelungsstellung 17 gebracht werden, so dass dann, wie in Fig. 5 gezeigt, der Deckel 10 gegenüber dem Gefäß 6 mittels der Verriegelungsteile 17 verriegelt ist. Die eigentliche Drehung der Verriegelungsteile 17 erfolgt mittels zweier Elektromotoren 19, die jeweils einem Verriegelungsteil 17 zugeordnet sind. Verbunden sind die Elektromotoren 19 mit dem ihnen jeweils zugeordneten Verriegelungsteil 17 über ein jeweiliges Untersetzungsgetriebe 18, wie den Fig. 1 und 2 entnehmbar.

Wie wiederum in den Fig. 3, 4 und 5 gezeigt, weisen die Verriegelungsteile 17 jeweils eine Höhlung 20 auf, die in der Verriegelungsstellung der Verriegelungsteile 17 den Gefäßrand 13 mit der Wölbungsfläche 14 des Gefäßes 6 zusammen mit dem darauf aufliegenden Deckelrand 16 des Deckels 10 aufnimmt. Im Verriegelungszustand der Verriegelungsteile 17 liegen die äußeren Enden des Gefäßrandes 13 und des darauf aufliegenden Deckelrandes 16 im hinteren Höhlungsabschnitt 22 an der Höhlung 20 an. Ein Übergreifabschnitt 21 verhindert dabei im Verriegelungszustand der Verriegelungsteile 17, dass der Deckel 10 nach oben abgenommen werden kann, da er den Deckelrand 16 übergreift. Als Gegenlager dazu wirkt ein Auflagebereich 23 in einem Bereich des Verriegelungsteils 3, in dem um die Drehachse y herum die beiden Verriegelungsteile 17 im Querschnitt jeweils im Wesentlichen halbkreisförmig ausgebildet sind.

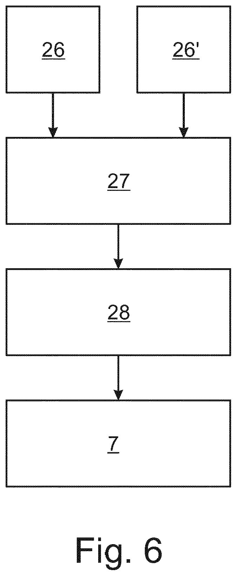

Maßgeblich bei dem elektrischen Küchengerät 1 gemäß dem vorliegend beschriebenen bevorzugten Ausführungsbeispiel ist nun, dass, wie in Fig. 2 gezeigt, zwei Drehwinkelerfassungseinrichtungen 26, 26' vorgesehen sind. Diese Drehwinkelerfassungseinrichtungen 26, 26' sind als kontaktlos arbeitende Potentiometer ausgestaltet, mit denen die Drehung der Verriegelungsteile 17 erfassbar ist. Wie schematisch in Fig. 6 dargestellt, sind diese Drehwinkelerfassungseinrichtungen 26, 26' mit einer Ermittlungseinrichtung 27 verbunden, die ihrerseits mit einer Freischalteinrichtung 28 verbunden ist. Mit den Drehwinkelerfassungseinrichtungen 26, 26' wird der Weg erfasst, der beim Drehen eines jeweiligen Verriegelungsteils 17 von diesem jeweils selbst zurückgelegt wird.

Dieser erfasster Drehweg wird an die Ermittlungseinrichtung 27 weitergegeben, in der dann aufgrund des Drehweges die jeweilige aktuelle Drehstellung der Verriegelungsteile 17 ermittelt wird. Nach Weitergabe dieser Drehstellungen an die Freischalteinrichtung 18 wird von dieser geprüft, ob diese Drehstellungen in dem vorbestimmten Bereich liegen, der einen vorschriftsmäßigen Verriegelungsbereich der Verriegelungsteile 17 definiert. Nur wenn dies der Fall ist, wird von der Freischalteinrichtung 28 die Verarbeitungseinrichtung 7 derart angesteuert, dass deren Betrieb freigegeben wird und somit mittels des Rühr- und Schneidwerks eine Verarbeitung von in das Gefäß 6 eingebrachten Nahrungsmitteln ermöglicht wird. Auf diese Weise werden derartige Gefahren vermieden, die sich durch das Berühren des Rühr- und Schneidwerks im Gefäß 6 mit der Hand eines Benutzers des elektrischen Küchengeräts 1 bei abgenommenem Deckel 10 ergeben würden.

### Bezugszeichenliste

- Elektrisches Küchengerät: 1
- Bedienfeld: 2
- Einstellknopf: 3
- Display: 4
- Gefäßaufnahme: 5
- Gefäß: 6
- Verarbeitungseinrichtung: 7
- Elektromotor für die Verarbeitungseinrichtung: 8
- Netzanschlusskabel: 9
- Deckel: 10
- Einfüllöffnung: 11
- Gefäßwandung: 12
- Gefäßrand: 13
- Wölbungsfläche: 14
- Kragen: 15
- Deckelrand: 16
- Verriegelungsteil: 17
- Untersetzungsgetriebe: 18
- Elektromotor für das Verriegelungsteil: 19
- Höhlung: 20
- Übergreifabschnitt: 21
- Höhlungsabschnitt: 22
- Auflagebereich: 23
- Tasten: 24
- Zentrale Steuereinheit: 25
- Drehwinkelerfassungseinrichtungen: 26, 26'
- Ermittlungseinrichtung: 27
- Freischalteinrichtung: 28

## Patentansprüche

1. Elektrisches Küchengerät (1), mit einem Gefäß (6), einem Deckel (10) zum Verschließen des Gefäßes (6), einer Verarbeitungseinrichtung (7) zum Verarbeiten eines Nahrungsmittels in dem Gefäß (6) und einem Verriegelungsteil (17) zum Verriegeln des Deckels (6) auf dem Gefäß (10), wobei das Verriegelungsteil (17) zum Verriegeln des Deckels (6) auf dem Gefäß (10) mittels eines Verriegelungsantriebs um eine Verriegelungsachse drehbar ist, **dadurch gekennzeichnet, dass** eine Erfassungseinrichtung vorgesehen ist, mit der der Weg erfassbar ist, den beim Drehen des Verriegelungsteils (17) der Verriegelungsantrieb, das Verriegelungsteil (17) selbst oder/und ein den Verriegelungsantrieb mit dem Verriegelungsteil (17) verbindendes Verbindungsteil zurücklegt.

2. Elektrisches Küchengerät nach Anspruch 1, **dadurch gekennzeichnet, dass** die Erfassungseinrichtung zur Drehwinkelerfassung des Verriegelungsteils (17) ausgebildet und eingerichtet ist.

3. Elektrisches Küchengerät nach Anspruch 2, **dadurch gekennzeichnet, dass** zur Drehwinkelerfassung ein, vorzugsweise kontaktloses, Potentiometer oder/und ein Hall-Sensor vorgesehen ist.

4. Elektrisches Küchengerät nach einem der vorherigen Ansprüche, **dadurch gekennzeichnet, dass** der Verriegelungsantrieb einen Elektromotor (19), einen Eletromagneten, einen Piezzoantrieb oder/und einen Hydraulikantrieb aufweist.

5. Elektrisches Küchengerät nach Anspruch 4, **dadurch gekennzeichnet, dass** der Verriegelungsantrieb ein Schrittantrieb ist und die Erfassungseinrichtung zur Erfassung der Arbeitsschritte des Schrittantrieb ausgebildet und eingerichtet ist.

6. Elektrisches Küchengerät nach einem der vorherigen Ansprüche, **dadurch gekennzeichnet, dass** eine mit der Erfassungseinrichtung verbundene Ermittlungseinrichtung (27) vorgesehen ist, die zur Ermittlung der Drehstellung des Verriegelungsteils (17) auf der Grundlage des von der Erfassungseinrichtung erfassten Weges ausgebildet und eingerichtet ist.

7. Elektrisches Küchengerät nach Anspruch 6, **dadurch gekennzeichnet, dass** eine mit der Ermittlungseinrichtung (27) verbundene Freischalteinrichtung (28) vorgesehen ist, die dazu ausgebildet und eingerichtet ist, den Betrieb der Verarbeitungseinrichtung (7) nur dann freizuschalten, wenn von der Ermittlungseinrichtung (27) eine Drehstellung des Verriegelungsteils (17) in einem vorbestimmten Bereich ermittelt worden ist.

8. Elektrisches Küchengerät nach einem der vorherigen Ansprüche, **dadurch gekennzeichnet, dass** der Verriegelungsantrieb über ein Untersetzungsgetriebe (18) auf das Verriegelungsteil (17) wirkt.

9. Elektrisches Küchengerät nach einem der vorherigen Ansprüche, **dadurch gekennzeichnet, dass** zwei Verriegelungsteile (17) vorgesehen sind, die vorzugsweise parallel zueinander angeordnet sind.

## Claims

1. Electrical kitchen appliance (1) comprising a vessel (6), a lid (10) for closing the vessel (6), a processing device (7) for processing a food product in the vessel (6) and a locking part (17) for locking the cover (6) on the vessel (10), the locking part (17) for locking the cover (6) on the vessel (10) being rotatable about a locking axis by means of a locking drive, **characterised in that** a detection device is provided, which is used to be able to detect the path travelled by the locking drive, the locking part (17) itself and/or a connecting part that connects the locking drive to the locking part (17) when the locking part (17) is rotated.

2. Electrical kitchen appliance according to claim 1, **characterised in that** the detection device is designed and configured to detect the angle of rotation of the locking part (17).

3. Electrical kitchen appliance according to claim 2, **characterised in that** a preferably contactless potentiometer and/or a Hall sensor is/are provided for detecting the angle of rotation.

4. Electrical kitchen appliance according to any of the preceding claims, **characterised in that** the locking drive comprises an electric motor (19), an electric magnet, a piezo drive and/or a hydraulic drive.

5. Electrical kitchen appliance according to claim 4, **characterised in that** the locking drive is a stepper drive and the detection device is designed and configured to detect the working steps of the stepper drive.

6. Electrical kitchen appliance according to any of the preceding claims, **characterised in that** a determination device (27) is provided, which is connected to the detection device and is designed and configured to determine the angular position of the locking part (17) on the basis of the path detected by the detection device.

7. Electrical kitchen appliance according to claim 6, **characterised in that** an activation device (28) is provided, which is connected to the determination device (27) and is designed and configured to only activate operation of the processing device (7) when the determination device (27) has determined an angular position of the locking part (17) to be within a predetermined range.

8. Electrical kitchen appliance according to any of the preceding claims, **characterised in that** the locking drive acts on the locking part (17) by means of a reduction gear (18).

9. Electrical kitchen appliance according to any of the preceding claims, **characterised in that** two locking parts (17) are provided, which are preferably arranged in parallel with one another.

## Revendications

1. Robot de cuisine électrique (1), comprenant une cuve (6), un couvercle (10) pour fermer la cuve (6), un dispositif de traitement (7) pour traiter un aliment dans la cuve (6) et un élément de verrouillage (17) pour verrouiller le couvercle (10) sur la cuve (6), dans lequel l'élément de verrouillage (17) est susceptible de tourner autour d'un axe de verrouillage au moyen d'un dispositif d'entraînement de verrouillage, **caractérisé en ce qu'**un dispositif de détection est prévu lequel permet de détecter le chemin parcouru, lors du pivotement de l'élément de verrouillage (17), par le dispositif d'entrainement de verrouillage, l'élément de verrouillage (17) lui-même et/ou un élément de liaison reliant le dispositif d'entraînement avec l'élément de verrouillage (17).

2. Robot de cuisine électrique selon la revendication 1, **caractérisé en ce que** le dispositif de détection est conçu et agencé pour détecter l'angle de pivotement de l'élément de verrouillage (17).

3. Robot de cuisine électrique selon la revendication 2, **caractérisé en ce que** pour la détermination de l'angle de pivotement est prévu un potentiomètre de préférence sans contact et/ou un capteur à effet Hall.

4. Robot de cuisine électrique selon l'une des revendications précédentes, **caractérisé en ce que** le dispositif d'entraînement de verrouillage comprend un moteur électrique (19), un électroaimant, un entrainement piézoélectrique et/ou un entrainement hydraulique.

5. Robot de cuisine électrique selon la revendication 4, **caractérisé en ce que** le dispositif d'entrainement de verrouillage est un moteur pas à pas et que le dispositif de détection est conçu et agencé pour déterminer les pas réalisés par le moteur pas à pas.

6. Robot de cuisine électrique selon l'une des revendications précédentes, **caractérisé en ce qu'**est prévu un dispositif de détermination (27) relié au dispositif de détection, lequel dispositif de détermination (27) est conçu et agencé pour déterminer la position de pivotement de l'élément de verrouillage (17) sur la base du chemin détecté par le dispositif de détection.

7. Robot de cuisine électrique selon la revendication 6, **caractérisé en ce qu'**est prévu un dispositif de déconnexion (28) relié au dispositif de détermination (27), lequel dispositif de déconnexion (28) est conçu et agencé pour déconnecter le dispositif d'entrainement du dispositif de traitement (7) uniquement lorsque le dispositif de détermination (27) a déterminé une position de pivotement de l'élément de verrouillage (17) qui est comprise dans un intervalle prédéterminé.

8. Robot de cuisine électrique (1) selon l'une des revendications précédentes, **caractérisé en ce que** le dispositif d'entrainement de verrouillage agit sur l'élément de verrouillage (17) par le biais d'un réducteur de vitesse (18).

9. Robot de cuisine électrique (1) selon l'une des revendications précédentes, **caractérisé en ce que** deux éléments de verrouillage (17) sont prévus lesquels sont de préférence agencés parallèlement entre eux.
